# EUROPÄISCHE PATENTSCHRIFT

(11) **EP 3 390 500 B1**
(45) Veröffentlichungstag und Bekanntmachung des Hinweises auf die Patenterteilung: **07.06.2023**
(21) Anmeldenummer: 15841015.9
(22) Anmeldetag: 17.12.2015
(51) Int. Cl.: C08J 3/24, B05B 7/00, C08J 9/30

(54) **VERFAHREN ZUR VERARBEITUNG EINES KLEBSTOFFES UND EINE ENTSPRECHENDE VORRICHTUNG**
PROCESS FOR PROCESSING AN ADHESIVE AND A DEVICE THEREFOR
PROCÉDÉ POUR TRAITER UN ADHÉSIF ET DISPOSITIF CORRESPONDANT

(43) Veröffentlichungstag der Anmeldung: 24.10.2018
(73) Patentinhaber: OLBRICH GmbH, 46395 Bocholt (DE)
(72) Erfinder: JOSTEN, Andre, 46399 Bocholt (DE); ROBELING, Dirk, 46395 Bocholt (DE); WENNING, Frederic, 46397 Bocholt (DE)
(74) Vertreter: Angerhausen, Christoph
(86) Internationale Anmeldenummer: PCT/DE2015/100539
(87) Internationale Veröffentlichungsnummer: WO 2017/101894

(56) Entgegenhaltungen:
- EP-A1- 0 259 689
- EP-A2- 2 354 740
- WO-A2-2012/090151
- DE-A1-102004 003 227
- US-A1- 2007 090 130

## Beschreibung

Die Erfindung geht aus von einem Verfahren und einer Vorrichtung zur Verarbeitung eines Klebstoffes, beispielsweise eines Haftschmelzklebstoffes oder eines anderen Flüssigklebstoffes, wobei das Verfahren das Auftragen eines Klebstoffvorläuferprodukts auf einen Klebstoffträger und das Aktivieren und Vernetzen des Klebstoffvorläuferprodukts durch Beaufschlagen des Klebstoffvorläuferprodukts mit Wasserdampf und Wärme in einer Reaktionskammer umfasst, wobei bei dem Aktivieren und Vernetzen eine in Luft leicht entzündliche Verbindung freigesetzt wird. Ein derartiges Verfahren und eine entsprechende Vorrichtung sind aus der WO 2012/090151 A2 bekannt. Weitere Verfahren und Vorrichtungen sind in der EP 0259689 A1, der US 2007/090130 A1, der EP 2354740 A2 und der DE 10 2004 003 227 A1 beschrieben.

Es ist weiterhin bekannt, dass bei der Aktivierung und Vernetzung von Klebstoffvorläuferprodukten mitunter stark exotherm reaktionsfähige Verbindungen freigesetzt werden, etwa Methanol. Die bekannten Verfahren und Vorrichtungen schlagen zur Vermeidung reaktionsfähiger Konzentrationen vor, die in der Reaktionskammer vorliegende Luftatmosphäre im Wesentlichen ständig mit Frischluft zu versorgen, wobei die reaktionsfähige Abluft gegebenenfalls nach geeigneter Vorreinigung in die Atmosphäre entlassen wird.

Bei der Verarbeitung von Si-haltigen Klebstoffen blieb bislang die Bildung von Methanol (MeOH) sicherheitstechnisch unberücksichtigt, wobei dies sogar Prozesse umfasst hat, die ohne Abluft und Frischluftzufuhr gefahren wurden. Bei der Verarbeitung derartiger Klebstoffe ergibt sich jedoch die Notwendigkeit zur Abführung von Abluft. Die Abführung von Abluft wiederum nimmt jedoch entscheidenden Einfluss auf die im Verarbeitungsprozess einzuhaltenden Prozesspunkte. Es ergibt sich somit eine Notwendigkeit zur Optimierung des Gesamtprozesses, wenn dieser mit Abluft und Frischluftzufuhr betrieben werden.

Ein mit Abluft und Frischluftzufuhr betriebener Prozess bedingt zum Beispiel, dass mit erhöhter Wasserdampfzufuhr gearbeitet werden muss, um trotz der hohen Rate abgeleiteter Abluft und zugeleiteter Frischluft eine für die Aktivierung und Vernetzung des Klebstoffvorläuferprodukts erforderliche Wasserdampfkonzentration in der Reaktionskammer aufrechterhalten wird. Durch den hohen Austausch von Abluft durch Frischluft ist weiterhin eine entsprechend höhere Wärmezufuhr erforderlich, um die Aktivierungs- und Vernetzungsreaktionen aufrechtzuerhalten. Für die Aktivierung und Vernetzung von Klebstoffvorläuferprodukten ist es zwingend erforderlich, dass die Prozessparameter, insbesondere die Prozesstemperaturen und die Wasserdampfkonzentration in der Prozesskammer, innerhalb enger Grenzen eingehalten werden.

Es ist daher die Aufgabe der Erfindung, ein gattungsgemäßes Verfahren und eine entsprechende Vorrichtung derart weiterzuentwickeln, dass diese bei der Verarbeitung von Si-haltigen Klebstoffen, insbesondere in Bezug auf die Wasserdampf- und Wärmezufuhr, effizient ausgestaltet sind und dennoch eine effektive Reaktionsgaskontrolle erlauben. Sie sollten es weiterhin erlauben, dass eine erforderliche Abluftbehandlung in die prozesstechnische Optimierung einbezogen werden kann.

Diese Aufgabe wird erfindungsgemäß durch ein Verfahren mit den Merkmalen des Anspruchs 1 gelöst. Der nebengeordnete Anspruch 12 betrifft eine entsprechende Vorrichtung. Die abhängigen Ansprüche betreffen jeweils vorteilhafte Ausführungsformen der Erfindung.

Demgemäß ist vorgesehen, dass die mit während des Aktivierens und des Vernetzens entstehenden Reaktionsgasen versetzte Luft der Reaktionskammer aus der Reaktionskammer ausgeleitet und als Umluft in die Reaktionskammer rezirkuliert wird, wobei ein Abluftanteil der als Prozessluft rezirkulierten Umluft durch Frischluft ersetzt wird. Es kann dabei vorgesehen sein, dass die aus der Reaktionskammer ausgeleitete Luft auf die Konzentration eines reaktionsfähigen Gases, etwa Methanol, untersucht wird, um bei Überschreiten eines bestimmten, etwa nach Ciefährdungspotelitialgesichtspunkten bestimmten Schwellwertes eine Frischluftbeimischung bereitzustellen, die darauf abgestimmt ist, die Konzentration des reaktionsfähigen Gases auf ein unbedenkliches Niveau abzusenken. Dabei kann auch die Entstehungsrate des reaktionsfähigen Gases in der Reaktionskammer in Betracht gezogen werden, so dass die Konzentration des reaktionsfähigen Gases in der Kammer stets unterhalb eines bestimmten Schwellwertes liegt. So kann erreicht werden, dass nur soviel Frischluft zugeführt wird, wie es nach Sicherheitsaspekten zwingend erforderlich ist, wobei gleichzeitig erreicht wird, dass der Aktivierungs- und Vernetzungsprozess durch die ungewollte Abführung von Wasserdampf und Wärme nur um ein geringstmögliches Maß beeinflusst wird oder sogar völlig unbeeinflusst durch die Frischluftbeimischung betrieben kann. Dementsprechend müssen auch die Wasserdampf- und Wärmezufuhr nur insoweit über das Maß, welches für die Aufrechterhaltung der Reaktionen erforderlich ist, erhöht werden, wie es zum Ausgleich des vergleichsweise geringen verlustigen Wasserdampf- und Wärmegehalts aufgrund des durch Frischluft ersetzten Umluftanteils erforderlich ist.

Bei der Verarbeitung von Si-haltigen Klebstoffen kann insofern eine optimierte Prozessführung erreicht werden, als dass sich auch das MeOH in der Prozessluft in einer Gleichgewichtsreaktion befindet, wobei durch eine gezielte Abluft- und Zuluftsteuerung, beispielsweise durch gezielte Unterschreitung eines bestimmten Grenzwertes, eine bessere Prozess-Performance, beispielsweise in Bezug auf die Energienutzung und Produktqualität, erreicht werden kann.

Die Bestimmung der Konzentration des Reaktionsgases in der Reaktionskammerluft, beispielsweise die Bestimmung eines Methanolgehalts, kann mit Hilfe gängiger Sensorik erfolgen. Dazu sind aus dem Stand der Technik beispielsweise FID-Sensoren (FID = *Flame Ionisation Detector*) des Herstellers Sick Benath Atomic, oder FTA-Sensoren (FTA = *Flammentemperaturanalyse*) des Herstellers Scima bekannt.

Es kann vorgesehen sein, dass der durch Frischluft ersetzte Abluftanteil danach bestimmt wird, dass bei einer erwarteten Entstehung des Reaktionsgases eine Reaktionskonzentrationsgrenze zumindest für eine Mindestprozessdauer in der Reaktionskammer nicht erreicht wird. In Kenntnis der Zusammensetzung des Klebstoffvorläuferprodukts ist in der Regel exakt vorbestimmbar, in welchen Mengen dieses bei der Aktivierung und Vernetzung Reaktionsgase freisetzen wird. Ist darüber hinaus die Verweildauer des Klebstoffvorläuferproduktes in der Reaktionskammer bekannt, woraus sich in Kenntnis der übrigen Prozessparameter, wie Wasserdampfkonzentration und Wärmezufuhr, errechnen lässt, zu welchem Grad das Produkt bei Verlassen der Reaktionskammer aktiviert und vernetzt ist, so kann exakt bestimmt werden, wie viel Reaktionsgas das Klebstoffvorläuferprodukt während seiner Verweildauer in der Reaktionskammer freisetzt. In Kenntnis des abgeführten und rezirkulierten Luftvolumens lässt sich exakt bestimmen, welcher Frischluftanteil der Prozessluft zugeführt werden muss, damit eine bestimmte Reaktionsgaskonzentrationsobergrenze in der Reaktionskammer nicht überschritten wird.

Der durch Frischluft ersetzte Abluftanteil kann zumindest so groß sein, dass unter Zugrundelegung einer rechnerisch bestimmten oder nach oben abgeschätzten Reaktionsgasentstehung pro Zeiteinheit eine Obergrenze für die Reaktionsgaskonzentration nicht erreicht wird.

Es kann weiterhin vorgesehen sein, dass an mindestens zwei lateral voneinander beabstandeten Positionen in der Reaktionskammer periodisch oder kontinuierlich eine lokale Reaktionsgaskonzentration bestimmt wird und als Regelgröße in einen Regelkreis zur Bestimmung des Abluftanteils der aus der Reaktionskammer ausgeleiteten und durch Frischluft ersetzten Umluft verwendet wird.

Das Verfahren kann weiterhin eine Feuchteregulierung aufweisen, bei der eine Wasserdampfkonzentration in der Reaktionskammer entsprechend einem erwarteten oder gemessenen Wasserdampfverlust aufgrund der aus der Reaktionskammer ausgeleiteten und durch Frischluft ersetzten Abluft nachgeregelt wird, sodass die Wasserdampfkonzentration in der Reaktionskammer im Wesentlichen konstant bei einem vorgegebenen Prozesspunkt für die Aktivierung und/oder die Vernetzung des Klebstoffvorläuferprodukts gehalten wird.

Das Verfahren kann darüber hinaus oder alternativ eine Feuchteregulierung aufweisen, bei der im Falle einer Überhöhung einer Wasserdampfkonzentration in der Reaktionskammer, insbesondere in einer in Vorschubrichtung des Klebstoffvorläuferprodukts durch die Reaktionsammer hinteren Unterkammer der Reaktionskammer, eine Feuchteregulierung der rezirkulierten Umluft durch eine Variation des durch Frischluft ersetzten Abluftanteils erfolgt.

Die Reaktionskammer kann in mehrere Unterabschnitte oder Unterkammern unterteilt sein, durch die das Klebstoffvorläuferprodukt auf dem Klebstoffträger nacheinander durchgeleitet wird, wobei in zumindest zwei der Unterabschnitte das Klebstoffvorläuferprodukt auf dem Klebstoffträger von einer separaten Prozessluftzufuhr beaufschlagt wird, und wobei kontinuierlich oder periodisch zumindest eine lokale Reaktionsgaskonzentration in den Unterabschnitten gemessen und mit einem lokalen Sollwert verglichen wird, wobei zur Prozesskontrolle der Anteil der aus der Reaktionskammer ausgeleiteten und durch Frischluft ersetzten Abluft entsprechend den bestimmten Abweichungen zwischen den Sollwerten und den gemessenen Istwerten zur Wiederherstellung der lokalen Sollwerte nachgeregelt wird.

Wenn die Reaktionskammer in mehrere Unterabschnitte oder Unterkammern unterteilt ist, durch die das Klebststoffvorläuferprodukt auf dem Klebstoffträger nacheinander durchgeleitet wird, so ist ebenfalls denkbar, dass zumindest in einer in Vorschubrichtung des Klebstoffvorläuferproduktes auf dem Klebstoffträger ersten Teilkammer der Reaktionskammer eine Wasserdampfbeaufschlagung des Klebstoffvorläuferprodukts bei gleichzeitiger Temperaturerhöhung erfolgt und wobei zumindest in einer in Vorschubrichtung des Klebstoffvorläuferprodukts auf dem Klebstoffträger zweiten Teilkammer der Reaktionskammer bei Aufrechterhaltung der Temperatur oder bei weiterer Temperaturerhöhung die Wasserdampfbeaufschlagung unterbrochen wird. Auf diese Weise kann erreicht werden, dass mit dem Verlassen des Klebstoffvorläuferprodukts der Vernetzungs- und Aktivierungsprozess des Klebstoffvorläuferprodukts rechtzeitig vorab unterbrochen worden ist, und so nach dem Verlassen der Reaktionskammer allenfalls noch eine nach Sicherheitsaspekten unwesentliche weitere Freisetzung von Reaktionsgasen erfolgt.

Weiterhin kann die Vorschubgeschwindigkeit des Klebstoffvorläuferprodukts auf dem Klebstoffträger danach eingeregelt werden, dass in der Reaktionskammer eine Methanolkonzentration oder ein bestimmter Methanolkonzentrationsbereich eingehalten wird, so dass eine Gleichgewichtsreaktion zur Aushärtung eines aus dem Klebstoffvorläuferprodukt gebildeten Klebstoffs anhand der Methanolkonzentration in der Reaktionskammerluft gesteuert werden kann. Auf diese Weise kann ebenfalls Einfluss auf die Produktqualität genommen werden.

Das Verfahren eignet sich insbesondere für die Verarbeitung von Klebstoffvorläuferprodukten, die bei der Aktivierung und Vernetzung eine in Luft leicht entzündliche Verbindung, beispielsweise Methanol freisetzen. Zur Vermeidung übermäßiger Reaktionsgaskonzentrationen kann vorgesehen sein, dass in mehreren der Unterabschnitte oder Unterkammern der Reaktionskammer ein Methanolgehalt in der Luft gemessen wird, wobei anhand einer bekannten Vorschubgeschwindigkeit des Klebstoffvorläuferprodukts auf dem Klebstoffträger durch die Reaktionskammer und anhand einer erwarteten Gesamtmethanolfreisetzung bei der Aktivierung und Vernetzung die Beaufschlagung des Klebstoffvorläuferprodukts mit Wasserdampf und Wärme in der Reaktionskammer so gesteuert wird, dass das Klebstoffvorläuferprodukt auf dem Klebstoffträger nach dem Verlassen der Reaktionskammer zu einem bestimmten Mindestmaß aktiviert und vernetzt ist. Dadurch kann sichergestellt werden, dass durch nachträgliche Aktivierungs- und Vernetzungsreaktionen nach dem Verlassen der Reaktionskammer zumindest sichergestellt ist, dass die dabei freigesetzten Methanolmengen zumindest eine bestimmte Obergrenze nicht überschreiten.

Wenn die Reaktionskammer in mehrere Unterabschnitte oder Unterkammern unterteilt ist, durch die das Klebststoffvorläuferprodukt auf dem Klebstoffträger nacheinander durchgeleitet wird, so kann auch vorgesehen sein, dass zumindest in einer in Vorschubrichtung des Klebstoffvorläuferprodukts auf dem Klebstoffträger letzten Unterkammer eine Konzentration der in Luft leicht entzündlichen Verbindung in der Kammerluft ermittelt wird. Dies kann dazu genutzt werden, dass der Vorschub des Klebststoffvorläuferprodukts auf dem Klebstoffträger verlangsamt oder sogar unterbrochen wird, wenn die Ermittlung der Konzentration der in Luft leicht entzündlichen Verbindung in der Kammerluft ergeben hat, dass ein bestimmter oberer Schwellwert überschritten wird.

In Kenntnis der Frischluftzufuhr in die Reaktionskammer sowie in Kenntnis der aktuellen Reaktionsgaskonzentration in der letzten Unterkammer ist die Reaktionsgasfreisetzung des Klebstoffvorläuferproduktes in der letzten Unterkammer, mithin unmittelbar vor dem Verlassen der Reaktionskammer, abschätzbar, so dass der Prozess entsprechend bei zu hoher Reaktionsgasfreisetzung in der letzten Unterkammer angepasst werden kann, beispielsweise indem die Vorschubgeschwindigkeit des Klebstoffvorläuferproduktes auf den Klebstoffträger verlangsamt oder unterbrochen wird, bis in der letzten Unterkammer bestimmte Obergrenzen für die Reaktionsgaskonzentration eingehalten werden.

Die Erfindung betrifft eine Vorrichtung zur Verarbeitung eines Klebstoffs, beispielsweise eines Haftschmelzklebstoffs, wobei die Vorrichtung dazu eingerichtet ist, ein Verfahren der zuvor beschriebenen Art auszuführen. Dabei ist die Vorrichtung eine in mehrere Unterkammern unterteilte Reaktionskammer, wobei in mehreren oder sämtlichen Unterkammern jeweils eine separate Wärmequelle vorliegt, über die das Klebstoffvorläuferprodukt mit Wärme beaufschlagt werden kann, wobei in einigen der Unterkammern jeweils eine Wasserdampfquelle vorliegt, über die das Klebststoffvorläuferprodukt mit Wasserdampf beaufschlagt werden kann.Mindestens eine in Vorschubrichtung des Klebstoffvorläuferproduktes durch die Reaktionskammer letzte Unterkammer weist eine Wärmequelle, jedoch keine Wasserdampfquelle auf.

Weiterhin kann die Vorrichtung, wie auch das zuvor beschriebene Verfahren, dazu eingerichtet sein, das Klebstoffvorläuferprodukt mit rezirkulierter Umluft einer bestimmten absoluten Feuchte, Temperatur und auch Turbulenz zu beaufschlagen Auf den aus der Reaktionskammer ausgeleiteten und durch Frischluft ersetzten Abluftanteil kann eine oxidative, vorzugsweise thermisch-chemische oder biologische, oder eine filternde und/oder waschende Abgasnachbehandlung angewendet werden.

Die Regelung der Vorrichtung kann derart erfolgen, dass vorab eine notwendige Mindesttemperatur der rezirkulierenden Umluft sowie eine erwartete mögliche Vorschubgeschwindigkeit eingestellt werden. Es können die Umlufttemperatur, die Luftgeschwindigkeit, die Umluftfeuchte, der Abluftvolumenstrom, der Zuluftvolumenstrom und die Oberflächentemperatur des Produkts sensorisch erfasst werden. Auf diese Weise kann ein stabiler Prozess mit den oben genannten Einflussfaktoren für ein bestimmtes Produkt (Klebstoffrezeptur, Auftragsgewicht) voreingestellt werden.

Ist nun die Methanolkonzentration in der Unterkammer unwirtschaftlich niedrig, werden Frischluftzufuhr und der entsprechende Abluftanteil in der Reaktioskammer bzw. nur in einer bestimmten Unterkammer dieser soweit reduziert, wie es sicherheitstechnisch zulässig ist, d.h. eine Obergrenze für die Methanolkonzentration nicht erreicht wird. Temperatur und Feuchte werden dabei konstant belassen. Soweit sich die Produkteigenschaften nicht ändern, ist der zulässige Schwellwert auch die Größe, auf die geregelt wird, je nach Unterkammer kann sich aber ein individueller Schwellwert einstellen, der die Qualität des Prozesses signifikant beeinflusst und unterhalb des zulässigen Schwellwertes liegen kann. In diesem Fall wird der sich als ideal herausstellende Schwellwert festgeschrieben und die notwendige Abluft über die Regelelemente Zuluft und Abluft nachgeregelt. Durch die Veränderung der Abluftmenge aufgrund einer nicht optimalen Methanolkonzentration wird ein Nachregeln der Feuchte notwendig. Für jede Unterkammer wird ein optimales Prozessfenster in dieser Reihenfolge gesucht.

Die Vorrichtung kann weiterhin für das Auftragen des Klebstoffvorläuferprodukts auf den Klebstoffträger eine Breitschlitzdüse mit oder ohne einem Rollstab, einem Rollcoater oder einer alternativen Walzenvorrichtung aufweisen. Der Klebstoffträger kann in Transportrichtung vor und hinter einer Station für das Auftragen des Klebstoffvorläuferproduktes mittels Kontakt- oder Strahlungswärme temperiert, insbesondere vorgewärmt bzw. aufgeheizt sein. Es kann insbesondere auch vorgesehen sein, dass das auf dem Klebstoffträger aufgetragene Klebstoffvorläuferprodukt zwischen einer Station für das Auftragen des Klebstoffvorläuferproduktes und einer Reaktionskammer eingekapselt und/oder klimatisiert, transportiert wird.

Die als bahnführende Gegenwalze im Bereich einer Station für das Auftragen des Klebstoffvorläuferproduktes auf einem Klebstoffträger kann eine Gummiwalze mit einer Härte zwischen 20 Shore A und 80 Shore D, insbesondere zwischen 60 Shore A und 95 Shore A sein.

In der Reaktionskammer kann der Klebstoffträger mit aufgebrachtem Klebstoffvorläuferprodukt mit Unter- und/oder Oberluft beaufschlagt werden, wobei der Klebstoffträger mithilfe von Unterluftdüsen nach dem Coanda- oder Venturi-Prinzip auf in der Reaktionskammer für den Transport vorgesehenen Leitwalzen fixiert wird. Die Reaktionskammer kann als Schwebekanal mit Schwebedüsen ausgebildet sein. Weiterhin kann die Reaktionskammer eine Einhausung aus korrosionsbeständigem Material, insbesondere aus Edelstahl aufweisen. Die Reaktionskammer, die Unterabschnitte der Reaktionskammern und die Verbindungsabschnitte der Unterabschnitte können gegen Wärmeverlust isoliert sein. Die Feuchtigkeit in der Reaktionskammer bzw. in den Unterabschnitten der Reaktionskammer kann in Form von Dampf, Aerosol, Wasser oder Zuluft mit Luft hoher Feuchte bereitgestellt werden. Weiterhin kann der Klebstoffträger mit aufgebrachtem Klebstoffprodukt nach dem Verlassen der Reaktionskammer auf Temperaturen kleiner als 60 °C, insbesondere kleiner als 30 °C gekühlt werden.

Weitere Einzelheiten der Erfindung werden anhand der nachstehenden Figur erläutert. Diese zeigt schematisch eine beispielhafte Verarbeitungsanlage zur Implementierung des Verfahrens zur Verarbeitung eines Klebstoffes, wie es zuvor beschrieben worden ist.

In einem Schmelztrog 1 wird flüssiges Schmelzklebstoffvorläufermatrial 5 bereitgestellt und über eine Düse 2, die beispielsweise eine Nordson-TrueCoat-Düse sein kann, auf einen Klebstoffträger 4 aufgetragen. Der Klebstoffträger 4 kann ein beschichtetes Papier oder eine unbehandelte oder behandelte Folie wie PET oder PMMA sein. Sie wird über ein Walzensystem transportiert, das eine temperierte Walze 3 aufweist, die sicherstellt, dass das flüssige Schmelzklebstoffvorläufermaterial 5 bei einer Temperatur gehalten wird, welche es erlaubt, dass dieser auf dem Klebstoffträger 4 als dünne Schicht aufgetragen werden kann. Das Schmelzklebstoffvorläufermaterial 5 bildet ein Klebstoffvorläuferprodukt, welches über das Walzensystem auf dem Klebstoffträger 4 aufgetragen durch die Reaktionskammer 6 geleitet wird, um dort durch Wärme- und Wasserdampfbeaufschlagung aktiviert und vernetzt zu werden.

Die Reaktionskammer 6 ist in Unterkammern 6.1, 6.2, 6.3, 6.4 unterteilt. Es ist vorgesehen, dass die Reaktionskammern 6.1 und 6.2 zur Aktivierung und Vernetzung des Klebstoffvorläuferproduktes 5 dienen, wozu die Unterkammer 6.1 und 6.2 jeweils eine separate Wasserdampfzufuhr 8 und separate Wärmezufuhr (nicht dargestellt) aufweisen. Die Unterkammern 6.3 und 6.4 weisen keine Wasserdampfzufuhr auf. Sämtliche der Unterkammern 6.1-6.4 weisen voneinander unabhängige Wärmequellen auf, um zu einer feineren Abstimmung des Prozesses die Prozesstemperatur unterkammerabhängig einstellen zu können. Die Unterkammern 6.1-6.4 können jeweils eine Sensorik zur Bestimmung eines Reaktionsgases, hier MeOH, aufweisen, so dass entsprechend der gemessenen Reaktionsgaskonzentration der Prozess durch Einflussnahme auf die Wasserdampfzufuhr und/oder durch Einflussnahme auf die Wärmezufuhr eingeregelt werden kann.

Die Unterkammern 6.1-6.4 weisen jeweils eine Abluftableitung 7 und separate Prozessluftzuführungen 9.1-9.4 auf, wobei die Prozessluftzuführungen 9.1-9.4 in die Unterkammern 6.1-6.4 entsprechend gemessenen Reaktionsgaskonzentrationen in den Unterkammern 6.1-6.4 nachgeregelt werden kann.

Insbesondere kann der Prozess damit so gesteuert werden, dass nach Verlassen der in Vorschubrichtung des Klebstoffträgers 4 mit dem Klebststoffvorläuferprodukt 5 letzten Unterkammer 6.4 die frei werdende Restmethanolmenge auf ein unbedenkliches Minimum reduziert wird. Nach dem Verlassen der Reaktionskammer 6 wird das aktivierte und vernetzte Klebstoffprodukt noch mit einer Deckschicht 9 kaschiert, so dass es zwischen der Deckschicht 9 und der Klebstoffträgerschicht 4 eingeschlossen ist. Die Deckschicht 9 ist jedoch nur optional und nicht zwingend erforderlich. Es kann beispielsweise vorgesehen sein, dass das verarbeitete Produkt aus Klebstoffträger 4 und Klebststoffvorläuferprodukt 5 nach dem Verlassen der Reaktionskammer und ggf. einer gewissen Abdampfstrecke in sich gewickelt wird.

Zur Prozesssteuerung kann vorgesehen sein, dass Vorschubgeschwindigkeit, Temperatur der rezirkulierten Luft, Dampfkonzentration der rezirkulierten Luft (also die relative Feuchte der Luft, die mit dem Klebstoff in Berührung kommt) und der Zu- und Abluftvolumenstrom geregelt werden.

Mit der Vorschubgeschwindigkeit wird in Abhängigkeit der anderen Parameter die grobe Voreinstellung der Prozessgeschwindigkeit vorgenommen. Über die Temperatur und die Luftgeschwindigkeit können der Wärmeübergang und die Reaktionsgeschwindigkeit festgelegt werden. Die Temperatur selbst kann über einen Wärmetauscher (WT), beispielsweise einen Öl-Luft-WT, einen Wasser-Luft-WT, einen Dampf-Luft-WT, oder einen elektrisch beheizten WT, eingestellt werden. Alternativ kann auch eine direkte Beheizung der Reaktionskammer 6 vorgesehen sein, etwa mit Hilfe eines Gasbrenners.

Die Dampfkonzentration kann über einen kapazitiven Luftfeuchtesensor gemessen oder über eine Feuchtekugelmessung bestimmt werden. Weicht der Istwert vom Sollwert ab, kann z.B. über eine Dampflanze zusätzliche Feuchtigkeit in eine der Unterkammern 6.1, 6.2 eingeleitet werden. Bei Überschreitung der Dampfkonzentration muss durch sensible Anpassung (Erhöhung) des Abluftvolumenstroms, und korreliert des Zuluftvolumenstroms, die Dampfmenge reduziert werden.

Die Abluftregelung kann mit Hilfe korrelierter Zu- und Abluftklappen separat für jede der Unterkammern 6.1, 6.2, 6.3, 6.4 erfolgen. Bei Überschreitung der Dampf- oder MeOH-Konzentration werden die Abluftklappen weiter geöffnet und die Zuluftklappen entsprechend mit verändert, so dass der Einfluss der Klappenpositionsveränderung auf die jeweilige Unterkammer begrenzt bleibt. Die quantifizierte Menge an Zu- und Abluft wird z.B. als Differenzdruckwert über Pitotrohre oder als Blendendifferenzdruckwert oder vergleichbar ermittelt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

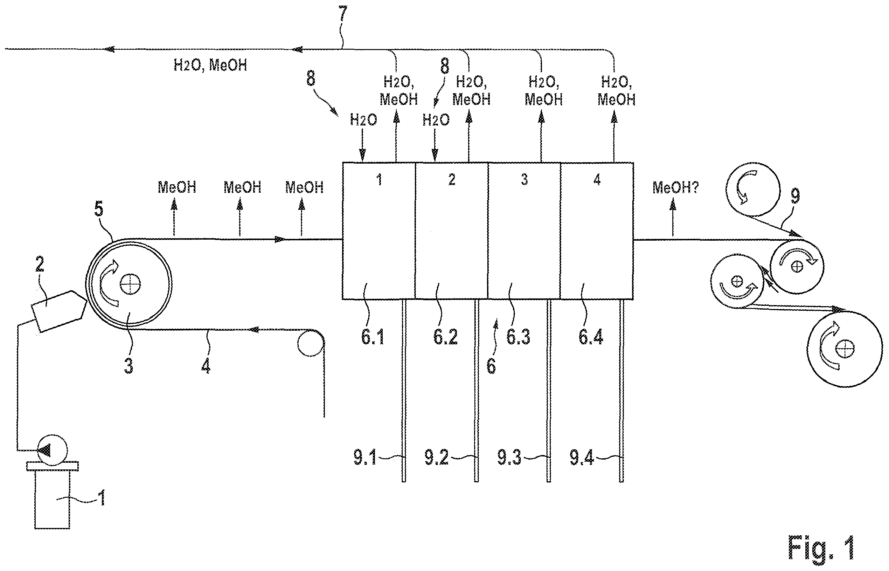

## Patentansprüche

1. Verfahren zur Verarbeitung eines Klebstoffs, wobei das Verfahren das Auftragen eines Klebstoffvorläuferprodukts auf einen Klebstoffträger und das Aktivieren und Vernetzen des Klebstoffvorläuferprodukts durch Beaufschlagung des Klebstoffvorläuferprodukts mit Wasserdampf und Wärme in einer Reaktionskammer umfasst, wobei bei dem Aktivieren und Vernetzen eine in Luft leicht entzündliche Verbindung freigesetzt wird, und wobei das Verfahren **dadurch gekennzeichnet ist, dass** mit während des Aktivierens und des Vernetzens entstehenden Reaktionsgasen versetzte Luft in der Reaktionskammer aus der Reaktionskammer ausgeleitet und als Umluft in die Reaktionskammer rezirkuliert wird, wobei ein Abluftanteil der als Umluft rezirkulierten Luft durch Frischluft ersetzt wird.

2. Verfahren nach Anspruch 1, bei dem der durch Frischluft ersetzte Abluftanteil danach bestimmt wird, dass bei einer erwarteten Entstehung des Reaktionsgases eine Reaktionsgaskonzentrationsgrenze zumindest für eine Mindestprozessdauer nicht erreicht wird, wozu der durch Frischluft ersetzte Abluftanteilanteil zumindest so groß gewählt wird, dass unter Zugrundelegung einer rechnerisch bestimmten oder nach oben abgeschätzten Reaktionsgasentstehung eine Obergrenze einer Reaktionsgaskonzentration nicht erreicht wird.

3. Verfahren nach einem der vorangegangenen Ansprüche, bei dem an mindestens zwei lateral voneinander beabstandeten Positionen in der Reaktionskammer periodisch oder kontinuierlich eine lokale Reaktionsgaskonzentration bestimmt wird und als Regelgröße in einem Regelkreis zur Bestimmung des Abluftanteils der aus der Reaktionskammer ausgeleiteten und durch Frischluft ersetzten Umluft verwendet wird.

4. Verfahren nach einem der vorangegangenen Ansprüche, das weiterhin eine Feuchteregulierung aufweist, bei der eine Wasserdampfkonzentration in der Reaktionskammer entsprechend einem erwarteten oder gemessenen Wasserdampfverlust aufgrund der aus der Reaktionskammer ausgeleiteten und durch Frischluft ersetzten Abluft nachgeregelt wird, sodass die Wasserdampfkonzentration in der Reaktionskammer im Wesentlichen konstant bei einem vorgegebenen Prozesspunkt für die Aktivierung und/oder die Vernetzung des Klebstoffvorläuferprodukts gehalten wird.

5. Verfahren nach einem der vorangegangenen Ansprüche, das weiterhin eine Feuchteregulierung aufweist, bei der im Falle einer Überhöhung einer Wasserdampfkonzentration in der Reaktionskammer, insbesondere in einer in Vorschubrichtung des Klebstoffvorläuferprodukts durch die Reaktionskammer hinteren Unterkammer der Reaktionskammer, eine Feuchteregulierung der rezirkulierten Umluft durch eine Variation des durch Frischluft ersetzten Abluftanteils erfolgt.

6. Verfahren nach einem der vorangegangenen Ansprüche, bei dem die Reaktionskammer in mehrere Unterabschnitte oder Unterkammern unterteilt ist, durch die das Klebstoffvorläuferprodukt auf dem Klebstoffträger nacheinander durchgeleitet wird, wobei in zumindest zwei der Unterabschnitte das Klebstoffvorläuferprodukt auf dem Klebstoffträger von einer separaten Prozessluftzufuhr beaufschlagt wird, und wobei kontinuierlich jeweils eine lokale Reaktionsgaskonzentration in den Unterabschnitten gemessen und mit einem lokalen Sollwert verglichen wird, wobei zur Prozesskontrolle der Abluftanteil der aus der Reaktionskammer ausgeleiteten und durch Frischluft ersetzten Umluft entsprechend den bestimmten Abweichungen zwischen den Sollwerten und den gemessenen Istwerten zur Wiederherstellung der lokalen Sollwerte nachgeregelt wird.

7. Verfahren nach einem der vorangegangenen Ansprüche, bei dem die Reaktionskammer in mehrere Unterabschnitte oder Unterkammern unterteilt ist, durch die das Klebstoffvorläuferprodukt auf dem Klebstoffträger nacheinander durchgeleitet wird, wobei in einer in Vorschubrichtung des Klebstoffvorläuferprodukts auf dem Klebstoffträger ersten Teilkammer der Reaktionskammer eine Wasserdampfbeaufschlagung des Klebstoffvorläuferprodukts bei gleichzeitiger Temperaturerhöhung erfolgt, und wobei in einer in Vorschubrichtung des Klebstoffvorläuferprodukts auf dem Klebstoffträger zweiten Teilkammer der Reaktionskammer bei Aufrechterhaltung der Temperatur oder weiterer Temperaturerhöhung die Wasserdampfbeaufschlagung unterbrochen wird.

8. Verfahren nach einem der vorangegangenen Ansprüche, wobei bei dem Aktivieren und Vernetzen des Klebstoffvorläuferprodukts Methanol freigesetzt wird.

9. Verfahren nach Anspruch 8, bei dem die Reaktionskammer in mehrere Unterabschnitte oder Unterkammern unterteilt ist, durch die das Klebstoffvorläuferprodukt auf dem Klebstoffträger nacheinander durchgeleitet wird, wobei in mehreren der Unterabschnitte oder Unterkammern ein Methanolgehalt in der Luft gemessen wird, und wobei anhand einer bekannten Vorschubgeschwindigkeit des Klebstoffvorläuferprodukts auf dem Klebstoffträger durch die Reaktionskammer und einer erwarteten Gesamtmethanolfreisetzung bei dem Aktivieren und Vernetzen die Beaufschlagung des Klebstoffvorläuferprodukts mit Wasserdampf und Wärme in der Reaktionskammer so gesteuert wird, dass das Klebstoffvorläuferprodukts auf dem Klebstoffträger nach dem Verlassen der Reaktionskammer zu einem bestimmten Mindestmaß aktiviert und vernetzt ist.

10. Verfahren nach Anspruch 8 oder 9, bei dem die Reaktionskammer in mehrere Unterabschnitte oder Unterkammern unterteilt ist, durch die das Klebstoffvorläuferprodukt auf dem Klebstoffträger nacheinander durchgeleitet wird, wobei zumindest in einer in Vorschubrichtung des Klebstoffvorläuferprodukts auf dem Klebstoffträger letzten Unterkammer eine Konzentration der in Luft leicht entzündlichen Verbindung in der Kammerluft ermittelt wird.

11. Verfahren nach Anspruch 10, bei dem der Vorschub des Klebstoffvorläuferprodukts auf dem Klebstoffträger verlangsamt oder unterbrochen wird, wenn die Ermittlung der Konzentration der in Luft leicht entzündlichen Verbindung in der Kammerluft ergeben hat, dass ein bestimmter oberer Schwellwert überschritten ist.

12. Verfahren nach einem der vorangegangenen Ansprüche, bei dem eine Vorschubgeschwindigkeit des Klebstoffvorläuferprodukts auf dem Klebstoffträger so eingeregelt wird, dass eine Methanolkonzentration oder ein bestimmter Methanolkonzentrationsbereich in der Reaktionskammerluft eingehalten wird, so dass eine Gleichgewichtsreaktion zur Aushärtung eines aus dem Klebstoffvorläuferprodukt gebildeten Klebstoffs anhand der Methanolkonzentration in der Reaktionskammerluft gesteuert werden kann.

13. Verfahren nach einem der vorangegangenen Ansprüche, bei dem auf den aus der Reaktionskammer ausgeleiteten und durch Frischluft ersetzten Abluftanteil eine oxidative, vorzugsweise thermisch-chemische oder biologische, oder eine filternde und/oder waschende Abgasnachbehandlung angewendet wird.

14. Vorrichtung zur Verarbeitung eines Klebstoffes, wobei die Vorrichtung dazu eingerichtet ist, ein Verfahren nach einem der vorangegangenen Ansprüche auszuführen und eine in mehrere Unterkammern unterteilte Reaktionskammer aufweist, wobei in mehreren oder sämtlichen Unterkammern jeweils eine separate Wärmequelle vorliegt, über die das Klebstoffvorläuferprodukt mit Wärme beaufschlagt werden kann, wobei in einigen der Unterkammern jeweils eine Wasserdampfquelle vorliegt, über die das Klebstoffvorläuferprodukt mit Wasserdampf beaufschlagt werden kann, und wobei mindestens eine in Vorschubrichtung des Klebstoffvorläuferprodukts durch die Reaktionskammer letzte Unterkammer eine Wärmequelle, jedoch keine Wasserdampfquelle, aufweist.

15. Vorrichtung nach Anspruch 14, die für das Auftragen des Klebstoffvorläuferprodukts auf den Klebstoffträger eine Breitschlitzdüse mit oder ohne einem Rollstab, einem Rollcoater oder einer alternativen Walzenvorrichtung aufweist.

16. Vorrichtung nach Anspruch 14, bei der der Klebstoffträger in Transportrichtung vor und hinter einer Station für das Auftragen des Klebstoffvorläuferproduktes mittels Kontakt- oder Strahlungswärme temperiert, insbesondere vorgewärmt bzw. aufgeheizt ist.

17. Vorrichtung nach Anspruch 14, bei der das auf dem Klebstoffträger aufgetragene Klebstoffvorläuferprodukt in einem Bereich zwischen einer Station für das Auftragen des Klebstoffvorläuferproduktes und einer Reaktionskammer eingekapselt und/oder klimatisiert transportiert ist.

18. Vorrichtung nach Anspruch 14, bei der als bahnführende Gegenwalze im Bereich einer Station für das Auftragen des Klebstoffvorläuferproduktes auf einem Klebstoffträger eine Gummiwalze mit einer Härte zwischen 20 Shore A und 80 Shore D, insbesondere zwischen 60 Shore A und 95 Shore A verwendet wird.

19. Vorrichtung nach Anspruch 14, bei der in einer Reaktionskammer der Klebstoffträger mit aufgebrachtem Klebstoffvorläuferprodukt mit Unter- und/oder Oberluft beaufschlagt ist, wobei der Klebstoffträger mithilfe von Unterluftdüsen nach dem Coanda- oder Venturi-Prinzip auf in der Reaktionskammer für den Transport vorgesehenen Leitwalzen fixiert ist.

20. Vorrichtung nach Anspruch 14, bei der die Reaktionskammer als Schwebekanal mit Schwebedüsen ausgebildet ist.

21. Vorrichtung nach Anspruch 14, bei der die Reaktionskammer eine Einhausung aus korrosionsbeständigem Material, insbesondere aus Edelstahl aufweist.

22. Vorrichtung nach Anspruch 14, bei der die Reaktionskammer, die Unterabschnitte der Reaktionskammern und die Verbindungsabschnitte der Unterabschnitte gegen Wärmeverlust isoliert sind.

23. Vorrichtung nach Anspruch 14, bei der Feuchtigkeit in der Reaktionskammer bzw. in Unterabschnitten der Reaktionskammer in Form von Dampf, Aerosol, Wasser oder Zuluft mit Luft hoher Feuchte bereitgestellt ist.

24. Vorrichtung nach Anspruch 14, bei der der Klebstoffträger mit aufgebrachtem Klebstoffprodukt nach Verlassen der Reaktionskammer auf Temperaturen kleiner 60 °C, insbesondere kleiner 30 °C gekühlt ist.

## Claims

1. A method for processing an adhesive, wherein the method comprises applying an adhesive precursor product onto an adhesive carrier and activating and crosslinking the adhesive precursor product by treating the adhesive precursor product with water vapor and heat in a reaction chamber, wherein during said activating and crosslinking a compound is released which is highly flammable in air, and wherein the method is **characterized in that** air mixed with reaction gases forming during the activation and crosslinking in the reaction chamber is conducted away from the reaction chamber and recirculated as circulating air into the reaction chamber, wherein a portion of used air of the air recirculated as circulating air is replaced by fresh air.

2. The method according to claim 1, in which the portion of used air replaced by fresh air is determined so that, in the case of an expected formation of the reaction gas, a reaction gas concentration limit is not reached at least for a minimum process duration, wherefore the portion of used air replaced by fresh air is selected to be at least sufficiently large so that, based on a reaction gas formation determined by calculation or estimated upwards, an upper limit of a reaction gas concentration is not reached.

3. The method according to any one of the preceding claims, in which, in at least two positions spaced laterally from one another in the reaction chamber, a local reaction gas concentration is determined periodically or continuously and used as control variable in a control loop for the determination of the portion of used air of the circulating air discharged from the reaction chamber and replaced by fresh air.

4. The method according to any one of the preceding claims, which moreover comprises a moisture control, in which a water vapor concentration in the reaction chamber is readjusted based on the used air discharged from the reaction chamber and replaced by fresh air in accordance with an expected or measured water vapor loss, so that the water vapor concentration in the reaction chamber is kept substantially constant at a predetermined point of the process for the activation and/or the crosslinking of the adhesive precursor product.

5. The method according to any one of the preceding claims, which moreover comprises a moisture control, in which, in the case of an excess increase in a water vapor concentration in the reaction chamber, in particular in a rear subchamber of the reaction chamber viewed in feed direction of the adhesive precursor product through the reaction chamber, a moisture control of the recirculated circulating air occurs by varying the portion of used air replaced by fresh air.

6. The method according to any one of the preceding claims, in which the reaction chamber is subdivided into several subsections or subchambers through which the adhesive precursor product on the adhesive carrier is passed successively, wherein, in at least two of the subsections, the adhesive precursor product on the adhesive carrier is treated by a separate process air feed, and wherein in each case a local reaction gas concentration in the subsections is measured continuously and compared with a local target value, wherein, for the process control, the portion of used air of the circulating air which is discharged from the reaction chamber and replaced with fresh air is readjusted in accordance with the determined deviations between the target values and the actual measured values for the reestablishment of the local target values.

7. The method according to any one of the preceding claims, in which the reaction chamber is subdivided into several subsections or subchambers through which the adhesive precursor product on the adhesive carrier is passed successively, wherein, in a first subchamber of the reaction chamber viewed in feed direction of the adhesive precursor product on the adhesive carrier, the adhesive precursor product is treated with water vapor with simultaneous temperature increase, and wherein, in a second subchamber of the reaction chamber viewed in feed direction of the adhesive precursor product on the adhesive carrier, with maintenance of the temperature or additional temperature increase, the water vapor treatment is interrupted.

8. The method according to any one of the preceding claims, wherein, during said activating and crosslinking of the adhesive precursor product, methanol is released.

9. The method according to claim 8, in which the reaction chamber is subdivided into several subsections or subchambers through which the adhesive precursor product on the adhesive carrier is passed successively, wherein, in several of the subsections or subchambers, a methanol content in the air is measured, and wherein, based on a known feed speed of the adhesive precursor product on the adhesive carrier through the reaction chamber and on an expected total methanol release during the activation and crosslinking, the treatment of the adhesive precursor product with water vapor and heat in the reaction chamber is controlled in such a manner that, after leaving the reaction chamber, the adhesive precursor product on the adhesive carrier is activated and crosslinked to a certain minimum extent.

10. The method according to claim 8 or 9, in which the reaction chamber is subdivided into several subsections or subchambers through which the adhesive precursor product on the adhesive carrier is passed successively, wherein, in at least one last subchamber viewed in feed direction of the adhesive precursor product on the adhesive carrier, a concentration of the compound that is highly flammable in air in the chamber air is determined.

11. The method according to claim 10, in which the feed of the adhesive precursor product on the adhesive carrier is slowed or interrupted if the determination of the concentration of the compound that is highly flammable in air in the chamber air has shown that a certain upper threshold value has been exceeded.

12. The method according to any one of the preceding claims, in which a feed speed of the adhesive precursor product on the adhesive carrier is adjusted in such a manner that a methanol concentration or a certain methanol concentration range in the reaction chamber air is complied with, so that an equilibrium reaction for the curing of an adhesive formed from the adhesive precursor product can be controlled based on the methanol concentration in the reaction chamber air.

13. The method according to any one of the preceding claims, in which an oxidative, preferably thermal chemical or biological, or a filtering and/or washing used gas aftertreatment is applied to the portion of used air discharged from the reaction chamber and replaced by fresh air.

14. A device for processing an adhesive, the device being adapted to carry out a method according to any one of the preceding claims and comprising a reaction chamber divided into a plurality of subchambers, a separate heat source being present in each of a plurality or all of the subchambers, via which heat can be applied to the adhesive precursor product, a water vapor source being present in each of some of the sub-chambers, via which water vapor can be applied to the adhesive precursor product, and wherein at least one last subchamber viewed in feed direction of the adhesive precursor product through the reaction chamber comprises a heat source, but not a water vapor source.

15. The device according to claim 14, which, for the application of the adhesive precursor product onto the adhesive carrier, has a broad-slit nozzle with or without a roll rod, a roll coater or an alternative roll device.

16. The device according to claim 14, in which the adhesive carrier is temperature controlled by contact heat or radiation heat in transport direction before and after a station for the application of the adhesive precursor product.

17. The device according to claim 14, in which the adhesive precursor product applied on the adhesive carrier is transported, encapsulated and/or air-conditioned, in an area between a station for the application of the adhesive precursor product and a reaction chamber.

18. The device according to claim 14, in which, as path-guiding counter-roll in the area of a station for the application of the adhesive precursor product on an adhesive carrier, a rubber roll having a hardness between 20 Shore A and 80 Shore D, in particular between 60 Shore A and 95 Shore A, is used.

19. The device according to claim 14, in which, in a reaction chamber, the adhesive carrier with applied adhesive precursor product is exposed to air from above and/or below, wherein the adhesive carrier is fixed by means of lower air nozzles according to the Coanda or Venturi principle on guide rolls provided in the reaction chamber for the transport.

20. The device according to claim 14, in which the reaction chamber is designed as a hover channel with hover nozzles.

21. The device according to claim 14, in which the reaction chamber has a housing made of a corrosion-resistant material, particularly stainless steel.

22. The device according to claim 14, in which the reaction chamber, the subsections of the reaction chambers and the connection sections of the subsections are insulated against heat loss.

23. The device according to claim 14, in which the moisture in the reaction chamber or in subsections of the reaction chamber is prepared in the form of vapor, aerosol, water or feed air with very humid air.

24. The device according to claim 14, in which, after leaving the reaction chamber, the adhesive carrier with applied adhesive product is cooled to temperatures of less than 60 °C, in particular less than 30 °.

## Revendications

1. Procédé pour le traitement d'un adhésif, dans lequel le procédé comprend l'application d'un produit précurseur d'adhésif sur un support d'adhésif et l'activation et la réticulation du produit précurseur d'adhésif par la sollicitation du produit précurseur d'adhésif avec de la vapeur d'eau et de la chaleur dans une chambre de réaction, dans lequel, lors de l'activation et de la réticulation, un composé facilement inflammable est dégagé dans l'air et dans lequel le procédé est **caractérisé en ce que** l'air chargé avec les gaz de réaction dégagés pendant l'activation et la réticulation est évacué hors de la chambre de réaction et est remis en circulation vers la chambre de réaction en tant qu'air ambiant, dans lequel une part d'air évacué de l'air remis en circulation en tant qu'air ambiant est remplacée par de l'air frais.

2. Procédé selon la revendication 1, dans lequel la part d'air évacué remplacée par de l'air frais est ensuite déterminée de façon à ce que, lors d'un dégagement attendu du gaz de réaction, une limite de concentration en gaz de réaction ne soit pas atteinte au moins pendant une durée de processus minimale, ce qui permet de choisir une part d'air évacué remplacée par de l'air frais au moins assez importante pour que, sur la base d'un dégagement de gaz de réaction déterminé par calcul ou évaluée selon ci-dessus, une limite supérieure d'une concentration en gaz de réaction ne soit pas atteinte.

3. Procédé selon l'une des revendications précédentes, dans lequel, à au moins deux positions distantes entre elles latéralement dans la chambre de réaction, une concentration locale en gaz de réaction est déterminée et est utilisée en tant que grandeur de régulation dans un circuit de régulation pour la détermination de la part d'air évacué de l'air ambiant évacué hors de la chambre de réaction et remplacée par de l'air frais.

4. Procédé selon l'une des revendications précédentes, qui comprend en outre une régulation d'humidité dans laquelle une concentration en vapeur d'eau dans la chambre de réaction est régulée en fonction d'une perte en vapeur d'eau attendue ou mesurée sur la base de l'air évacué hors de la chambre de réaction et remplacé par de l'air frais, de façon à ce que la concentration en vapeur d'eau dans la chambre de réaction soit globalement constante à un point déterminé du processus pour l'activation et/ou la réticulation du produit précurseur d'adhésif.

5. Procédé selon l'une des revendications précédentes, qui comprend en outre une régulation d'humidité dans laquelle, dans le cas d'une augmentation d'une concentration en vapeur d'eau dans la chambre de réaction, plus particulièrement dans une sous-chambre arrière de la chambre de réaction, dans la direction d'avance du produit précurseur d'adhésif à travers la chambre de réaction, une régulation d'humidité de l'air ambiant remis en circulation a lieu grâce à une variation de la part d'air évacué remplacée par de l'air frais.

6. Procédé selon l'une des revendications précédentes, dans lequel la chambre de réaction est divisée en plusieurs sous-parties ou sous-chambres, à travers lesquelles le produit précurseur d'adhésif sur le support d'adhésif est guidé successivement, dans lequel, dans au moins une des deux sous-parties, le produit précurseur d'adhésif sur le support d'adhésif est sollicité par une entrée d'air de processus séparée et dans lequel une concentration locale en gaz de réaction dans les sous-parties est mesurée et comparée continuellement avec une valeur de consigne locale, dans lequel, pour le contrôle du processus, la part d'air évacué de l'air ambiant évacué hors de la chambre de réaction et remplacée par de l'air frais est régulée en fonction des écarts déterminés entre les valeurs de consigne et les valeurs réelles mesurées pour le rétablissement des valeurs de consigne locales.

7. Procédé selon l'une des revendications précédentes, dans lequel la chambre de réaction est divisée en plusieurs sous-parties ou sous-chambres, à travers lesquelles le produit précurseur d'adhésif sur le support d'adhésif est guidé successivement, dans lequel, dans une première chambre partielle de la chambre de réaction, dans la direction d'avance du produit précurseur d'adhésif sur le support d'adhésif, a lieu une sollicitation par de la vapeur d'eau du produit précurseur d'adhésif avec une augmentation simultanée de la température et dans lequel, dans une deuxième chambre partielle de la chambre de réaction, dans la direction d'avance du produit précurseur d'adhésif sur le support d'adhésif, la sollicitation par de la vapeur d'eau est interrompue par le maintien de la température ou une augmentation supplémentaire de la température.

8. Procédé selon l'une des revendications précédentes, dans lequel, lors de l'activation et de la réticulation du produit précurseur d'adhésif, du méthanol est dégagé.

9. Procédé selon la revendication 8, dans lequel la chambre de réaction est divisée en plusieurs sous-parties ou sous-chambres à travers lesquelles le produit précurseur d'adhésif sur le support d'adhésif est guidé successivement, dans lequel, dans plusieurs des sous-parties ou sous-chambres, une teneur en méthanol dans l'air en mesurée et dans lequel, à l'aide d'une vitesse d'avance connue du produit précurseur d'adhésif sur le support d'adhésif à travers la chambre de réaction et d'un dégagement de méthanol total attendu lors de l'activation et de la réticulation, la sollicitation du produit précurseur d'adhésif avec de l'a vapeur d'eau et de la chaleur dans la chambre de réaction est contrôlée de façon à ce que le produit précurseur d'adhésif sur le support d'adhésif soit activé et réticulé dans une mesure minimale déterminée après avoir quitté la chambre de réaction.

10. Procédé selon la revendication 8 ou 9, dans lequel la chambre de réaction est divisée en plusieurs sous-parties ou sous-chambres à travers lesquelles le produit précurseur d'adhésif sur le support d'adhésif est guidé successivement, dans lequel, au moins dans une dernière sous-chambre, dans une direction d'avance du produit précurseur d'adhésif sur le support d'adhésif, une concentration en composé facilement inflammable dans l'air de la chambre est déterminée.

11. Procédé selon la revendication 10, dans lequel l'avance du produit précurseur d'adhésif sur le support d'adhésif est ralentie ou interrompue lorsque la détermination de la concentration en composé facilement inflammable dans l'air de la chambre a révélé qu'une valeur seuil déterminée est dépassée.

12. Procédé selon l'une des revendications précédentes, dans lequel une vitesse d'avance du produit précurseur d'adhésif sur le support d'adhésif est régulée de façon à ce qu'une concentration en méthanol ou une plage de concentration déterminée en méthanol dans l'air de la chambre de réaction soit respectée, de sorte qu'une réaction d'équilibre pour le durcissement d'un adhésif formé à partir du produit précurseur d'adhésif puisse être contrôlée à l'aide de la concentration en méthanol dans l'air de la chambre de réaction.

13. Procédé selon l'une des revendications précédentes, dans lequel, sur la part d'air évacué hors de la chambre de réaction et remplacée par de l'air frais, est appliqué un post-traitement de gaz d'échappement, de préférence thermique-chimique ou biologique, ou filtrant et/ou nettoyant.

14. Dispositif de traitement d'un adhésif, dans lequel ce dispositif est conçu pour l'exécution d'un procédé selon l'une des revendications précédentes et comprend une chambre de réaction divisée en plusieurs sous-chambres, dans lequel, dans plusieurs ou dans toutes les sous-chambres, se trouve respectivement une source de chaleur séparée, par l'intermédiaire de laquelle le produit précurseur d'adhésif peut être sollicité par de la chaleur, dans lequel, dans certaines des sous-chambres, se trouve respectivement une source de vapeur d'eau, par l'intermédiaire de laquelle le produit précurseur d'adhésif peut être sollicité par de la vapeur d'eau et dans lequel au moins une dernière sous-chambre, dans la direction d'avance du produit précurseur d'adhésif à travers la chambre de réaction, comprend une source de chaleur, mais pas de source de vapeur d'eau.

15. Dispositif selon la revendication 14, qui comprend, pour l'application du produit précurseur d'adhésif sur le support d'adhésif, une buse à fente large avec ou sans barre de roulement, une coucheuse à rouleaux ou un dispositif à rouleaux alternatif.

16. Dispositif selon la revendication 14, dans lequel le support d'adhésif est régulé en température, plus particulièrement pré-chauffé ou chauffé, avant et après, dans la direction de transport, une station pour l'application du produit précurseur d'adhésif au moyen d'une chaleur par contact ou par rayonnement.

17. Dispositif selon la revendication 14, dans lequel le produit précurseur d'adhésif appliqué sur le support d'adhésif est encapsulé dans une zone entre une station pour l'application du produit précurseur d'adhésif et une chambre de réaction et/ou est transporté de manière climatisée.

18. Dispositif selon la revendication 14, dans lequel le contre-rouleau utilisé pour guider la bande au niveau d'une station pour l'application du produit précurseur d'adhésif sur un support d'adhésif est un rouleau en caoutchouc avec une dureté entre 20 Shore A et 80 Shore D, plus particulièrement entre 60 Shore A et 95 Shore A.

19. Dispositif selon la revendication 14, dans lequel, dans une chambre de réaction, le support d'adhésif avec le produit précurseur d'adhésif appliqué dessus est sollicité avec de l'air inférieur et/ou de l'air supérieur, dans lequel le support d'adhésif est fixé à l'aide de buses d'air inférieur selon le principe de Coanda ou de Venturi des rouleaux de guidage prévu dans la chambre de réaction pour le transport.

20. Dispositif selon la revendication 14, dans lequel la chambre de réaction est conçue comme un canal flottant avec des buses flottantes.

21. Dispositif selon la revendication 14, dans lequel la chambre de réaction comprend une enceinte en matériau résistant à la corrosion plus particulièrement en acier inoxydable.

22. Dispositif selon la revendication 14, dans lequel la chambre de réaction, les sous-parties des chambres de réaction et les portions de liaison des sous-parties sont isolées contre les pertes thermiques.

23. Dispositif selon la revendication 14, dans lequel une humidité est mise à disposition dans la chambre de réaction ou dans les sous-parties de la chambre de réaction sous la forme de vapeur, d'aérosol, d'eau ou d'une alimentation en air à fort taux d'humidité.

24. Dispositif selon la revendication 14, dans lequel le support d'adhésif avec le produit précurseur d'adhésif appliqué dessus est refroidi, après avoir quitté la chambre de réaction, à des températures inférieures à 60 °C, plus particulièrement inférieures à 30 °C.
